(19) **Europäisches Patentamt European Patent Office Office européen des brevets**

(11) **EP 4 725 641 A1**

(12) **EUROPEAN PATENT APPLICATION**

(43) Date of publication:
15.04.2026 Bulletin 2026/16

(21) Application number: 25201871.8

(22) Date of filing: 12.09.2025

(51) International Patent Classification (IPC):
*B23K 31/12* (2006.01)  *H01M 50/169* (2021.01)

(52) Cooperative Patent Classification (CPC):
**B23K 31/125; G01B 11/30; G01N 21/88;
H01M 50/169; B23K 2101/36**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 11.10.2024 KR 20240138796

(71) Applicant: **SAMSUNG SDI CO., LTD.
Yongin-si, Gyeonggi-do 17084 (KR)**

(72) Inventors:
• **MOON, Sang Hyup
16678 Suwon-si, Gyeonggi-do (KR)**
• **KIM, Min Jae
16678 Suwon-si, Gyeonggi-do (KR)**

(74) Representative: **Gulde & Partner
Patent- und Rechtsanwaltskanzlei mbB
Berliner Freiheit 2
10785 Berlin (DE)**

(54) **BONDING STRENGTH INSPECTION APPARATUS AND BONDING SYSTEM**

(57)    The present disclosure relates to a bonding strength inspection apparatus capable of inspecting a bonding strength of a bonding part without destruct an inspection target. The present disclosure provides a bonding strength inspection apparatus (300) comprising: a roughness measurement part (310) configured to measure a roughness of a bonding part (W) in which a base metal and a bonding member are bonded to each other; and a processor (320) configured to determine a bonding strength of the bonding part (W) based on the roughness.

EP 4 725 641 A1

## Description

BACKGROUND

1. Field

The present invention relates to a bonding strength inspection apparatus, which inspects a bonding strength of a bonding part. The present invention relates to a bonding system.

2. Discussion of Related Art

While primary batteries are not designed to be (re)charged, secondary (also known as rechargeable) batteries are batteries that are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery may include a positive electrode and/or negative electrode, an electrode assembly including the positive and/or negative electrode, a case for accommodating the electrode assembly, and a cap assembly which is coupled to an opening of the case to seal the case.

The cap assembly includes a vent, a cap-down, and a sub-plate located under the cap-down and bonded to the vent. In cases where components are not properly assembled in the cap assembly, the cap assembly may not fully seal the case.

SUMMARY

The invention is defined by the appended claims. The description that follows is subjected to this limitation. Any disclosure lying outside the scope of said claims is only intended for illustrative as well as comparative purposes.

Embodiments of the present disclosure provide a bonding strength inspection apparatus capable of inspecting a bonding strength of a bonding part, and/or a bonding system including the bonding strength inspection apparatus.

Embodiments of the present disclosure provide a bonding strength inspection apparatus used to manage the quality of bonding between a vent and a sub-plate in a cap assembly, and/or a bonding system including the bonding strength inspection apparatus.

Embodiments of the present disclosure provide a bonding strength inspection apparatus which performs a non-destructive inspection, in which a bonding part is not destructed, and/or a bonding system including the bonding strength inspection apparatus.

Embodiments of the present disclosure provide a bonding strength inspection apparatus including a roughness measurement part which measures a roughness of a bonding part of a base metal and a bonding member, and a processor which determines a bonding strength of the bonding part on the basis of the measured roughness.

Embodiments of the present disclosure provide a bonding strength inspection apparatus including: a roughness measurement part configured to measure a roughness of a bonding part in which a base metal and a bonding member are bonded to each other; and a processor configured to determine a bonding strength of the bonding part based on the roughness.

In some embodiments, the processor is configured to determine a ratio of a bonding depth of the bonding part to a thickness of the base metal based on the roughness, and wherein the processor is configured to determine the bonding strength based on the ratio.

In some embodiments, the processor is configured to determine the bonding part being in a normal bonding state when the ratio is within a predetermined range.

In some embodiments, the processor is configured to determine the bonding part being in an insufficient bonding state when the ratio is less than a predetermined range, and wherein the processor is configured to determine the bonding part being in an over-bonding state when the ratio is greater than the predetermined range.

In some embodiments, the bonding strength inspection apparatus further includes a memory configured to store data on the bonding strength based on the ratio, wherein the processor is configured to set a predetermined range based on the data.

In some embodiments, the predetermined range ranges from about 10% to about 50%.

In some embodiments, the roughness includes a ten-point average roughness (Rz) of the bonding part.

Embodiments of the present disclosure provide a bonding system including a bonding apparatus which bonds a bonding member to a base metal and a bonding strength inspection apparatus which determines a bonding strength of a bonding part in which the base metal and the bonding member are bonded, wherein the bonding strength inspection apparatus includes a roughness measurement part which measures a roughness of the bonding part and a processor which determines the bonding strength of the bonding part on the basis of the measured roughness.

Embodiments of the present disclosure provide a bonding system including: a bonding apparatus configured to bond a bonding member to a base metal; and a bonding strength inspection apparatus configured to determine a bonding strength of a bonding part in which the base metal and the bonding member are bonded to each other, wherein the bonding strength inspection apparatus includes a roughness measurement part measuring a roughness of the bonding part, and a processor configured to determine the bonding strength based on the roughness.

In some embodiments, the processor is configured to determine a ratio of a bonding depth of the bonding part to a thickness of the base metal based on the roughness, and wherein the processor is configured to determine the bonding strength.

In some embodiments, the processor is configured to determine the bonding part being in a normal bonding state when the ratio is within a predetermined range.

In some embodiments, the processor is configured to determine the bonding part being in an insufficient bonding state when the ratio is less than a predetermined range, and wherein the processor is configured to determine the bonding part being in an over-bonding state when the ratio is greater than the predetermined range.

In some embodiments, the bonding strength inspection apparatus further comprises a memory configured to store data on the bonding strength based on the ratio and wherein the processor is configured to set a predetermined range based on the data.

In some embodiments, the predetermined range ranges from about 10% to about 50%.

In some embodiments, the roughness includes a ten-point average roughness (Rz) of the bonding part.

In some embodiments, the base metal comprises a first surface facing the bonding member and a second surface located at a side opposite to the first surface, and wherein the bonding apparatus is configured to apply heat or a pressure to the second surface to bond the first surface and the bonding member.

In some embodiments, the roughness measurement part is configured to measure the roughness on the second surface.

In some embodiments, the bonding apparatus is configured to bond the base metal and the bonding member via friction welding.

In some embodiments, the bonding apparatus is configured to control output power for bonding the base metal and the bonding member based on the bonding strength.

Embodiments of the present disclosure provide a bonding system for a cap assembly including a cap-up, a vent provided under the cap-up, a cap-down which is installed under the vent and in which one or more holes through which at least a portion of the vent is exposed downward are formed, an insulator interposed between the vent and the cap-down, and a sub-plate provided under the cap-down and coupled to the vent through the holes, the bonding system including a bonding apparatus which bonds the sub-plate and the vent and a bonding strength inspection apparatus which measures a roughness of a bonding part in which the sub-plate and the vent are bonded and determines a bonding strength of the bonding part on the basis of the measured roughness.

Embodiments of the present disclosure provide a bonding system for a cap assembly including: a cap-up; a vent disposed below the cap-up; a cap-down disposed below the vent and having one or more holes exposing at least a portion of the vent downward; an insulator disposed between the vent and the cap-down; and a sub-plate disposed below the cap-down and coupled to the vent via the one or more holes, the bonding system including: a bonding apparatus configured to bond the sub-plate and the vent; and a bonding strength inspection apparatus configured to measure a roughness of a bonding part in which the sub-plate and the vent are bonded and configured to determine a bonding strength of the bonding part based on the roughness.

In some embodiments, the bonding strength inspection apparatus is configured to determine a ratio of a bonding depth of the bonding part to a thickness of the base metal based on the roughness, and is configured to determine the bonding strength based on the ratio.

BRIEF DESCRIPTION OF THE DRAWINGS

The drawings illustrate embodiments of the present disclosure, and further describe aspects and features of the present disclosure along with the detailed description of the present disclosure. Thus, the present disclosure should not be construed as being limited to the drawings:

FIG. 1 is a schematic cross-sectional view illustrating a cylindrical secondary battery according to embodiments of the present disclosure;
FIG. 2 is a schematic cross-sectional view illustrating a cap assembly according to embodiments of the present disclosure;
FIG. 3 is a schematic bottom view illustrating the cap assembly according to embodiments of the present disclosure;
FIG. 4 is a schematic block diagram illustrating components of a bonding system according to embodiments of the present disclosure;
FIG. 5 is a schematic block diagram illustrating components of a bonding strength inspection apparatus embodiments of the present disclosure;
FIG. 6 is a flowchart describing operation of the bonding strength inspection apparatus according to embodiments of the present disclosure;
FIG. 7 is an enlarged view illustrating a bonding part in the cap assembly describing a bonding depth according to embodiments of the present disclosure;
FIG. 8 shows a roughness of the bonding part measured according to embodiments of the present disclosure; and
FIG. 9 shows a bonding strength according to a ratio of a bonding depth to a thickness of a base metal according to embodiments of the present disclosure.

DETAILED DESCRIPTION

Embodiments of the present disclosure are described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

The terminology used herein is for the purpose of describing embodiments of the present disclosure and is not intended to be limiting of the present disclosure.

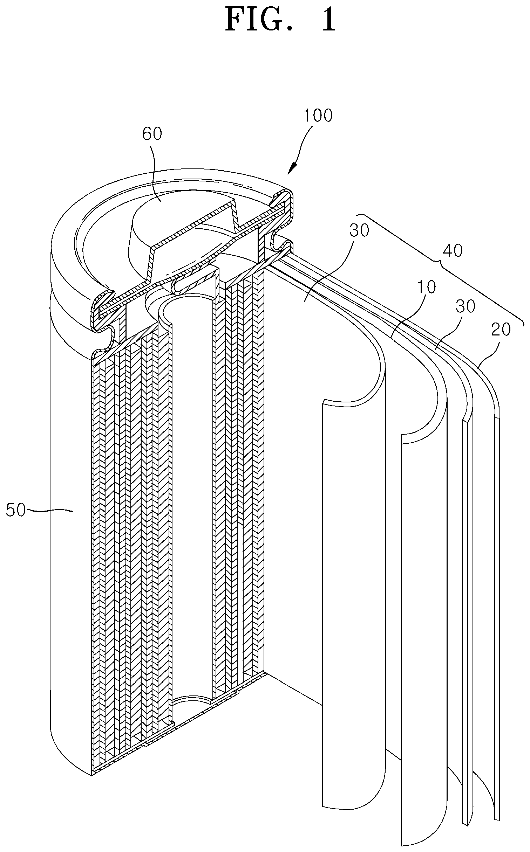

FIG. 1 is a schematic cross-sectional view illustrating a cylindrical secondary battery.

As illustrated in FIG. 1, a cylindrical lithium-ion secondary battery 100 may include a cylindrical case 50, an electrode assembly 40, and a cap assembly 60. The cylindrical lithium-ion secondary battery 100 may include a center pin (not shown). Because the cap assembly 60 performs current interruption, the cap assembly 60 may be referred to a current interrupt device.

The cylindrical case 50 may include a bottom portion having a substantially circular geometry and a cylindrical sidewall extending a predetermined length upward from a circumference of the bottom portion. An upper portion of the cylindrical case 50 is open during manufacturing of the secondary battery. The electrode assembly 40 and the center pin may be inserted into the cylindrical case 50 with an electrolyte during assembly of the secondary battery. For example, the cylindrical case 50, although not limited thereto, may include steel, stainless steel, aluminum, or an aluminum alloy.

The electrode assembly 40 may be accommodated in the cylindrical case 50. The electrode assembly 40 may include a negative electrode plate 20 in which a negative current collecting plate is coated with a negative active material (for example, graphite or carbon), a positive electrode 10 in which a positive current collecting plate is coated with a positive active material (for example, transition metal oxide ($LiCoO_2$, $LiNiO_2$, or $LiMn_2O_4$)), and a separator 30 located between the negative electrode 20 and the positive electrode 10 to prevent a short circuit while selectively allowing migration of lithium ions. The negative electrode 20, the positive electrode 10, and the separator 30 may be wound in a substantially cylindrical geometry.

The cap assembly 60 includes a cap-up. The cap assembly 60 may include a cap-down, a vent, or an insulator. The cap assembly 60 is coupled to an opening of the case 50 such that the electrode assembly 40 is sealed in the case 50.

However, the present invention is not limited thereto, and the case may have a circular geometry or a pouch geometry. The case may include a metal, such as aluminum, an alloy of aluminum, or steel coated with nickel, or a laminated film or plastic forming a pouch.

The electrode assembly 40 includes the negative electrode 20, the positive electrode 10, and the separator 30 located between the negative electrode 20 and the positive electrode 10. The electrode assembly 40 is accommodated in the cylindrical case 50 with the electrolyte (not shown).

## Positive electrode

The positive electrode active material may include a compound (lithiated intercalation compound) that is capable of intercalating and deintercalating lithium. Specifically, a composite oxide of lithium and/or a metal including cobalt, manganese, nickel, or combinations thereof may be used.

The composite oxide may be a lithium transition metal composite oxide. Non-limiting examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

For example, the following compounds represented by any one of the following Chemical Formulas may be used. $LiaA1-bXbO2-cDc$ ($0.90<a<1.8$, $0<b<0.5$, and $0\leq c\leq0.05$); $LiaMn2-bXbO4-cDc$ ($0.90<a<1.8$, $0<b<0.5$, and $0<c<0.05$); $LiaNi1-b-cCobXcO2-\alpha D\alpha$ ($0.90<a<1.8$, $0<b<0.5$, $0\leq c\leq0.5$, and $0<\alpha<2$); $LiaNi1-b-cMnbXcO2-\alpha D\alpha$ ($0.90<a<1.8$, $0<b<0.5$, $0\leq c\leq0.5$, and $0<\alpha<2$); $LiaNibCocL1dGeO2$ ($0.90<a<1.8$, $0\leq b\leq0.9$, $0\leq c\leq0.5$, $0\leq d\leq0.5$, and $0\leq e\leq0.1$); $LiaNiGbO2$ ($0.90\leq a\leq1.8$ and $0.001<b<0.1$); $LiaCoGbO2$ ($0.90\leq a\leq1.8$ and $0.001<b<0.1$); $LiaMn1-bGbO2$ ($0.90\leq a\leq1.8$ and $0.001<b<0.1$); $LiaMn2GbO4$ ($0.90\leq a\leq1.8$ and $0.001<b<0.1$); $LiaMn1-gGgPO4$ ($0.90\leq a\leq1.8$ and $0\leq g\leq0.5$); $Li(3-f)Fe2(PO4)3$ ($0\leq f\leq2$); or $LiaFePO4$ ($0.90\leq a\leq1.8$).

In the above Chemical Formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode 10 for a rechargeable lithium battery 100 may include a current collector and a positive electrode active material layer on the current collector. The positive electrode active material layer may include a positive electrode active material and may further include a binder and/or a conductive material (e.g., an electrically conductive material).

For example, the positive electrode 10 may include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other or one another and to attach the positive electrode active material to the current collector. Non-limiting examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon.

The conductive material may ensure conductivity (e.g., electrical conductivity) to the electrode. Any material that does not cause a detrimental chemical change (e.g., does not cause an undesirable chemical change in the rechargeable lithium battery) while capable of conducting electrons can be used in the battery. Non-limiting examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

## Negative electrode

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may include graphite such as non-shaped, sheet-shaped, flake-shaped, sphere-shaped, or fiber-shaped natural graphite or artificial graphite. The amorphous carbon may include a soft carbon, a hard carbon, a mesophase pitch carbonization product, or calcined coke.

The lithium metal alloy may include lithium and a metal including Na, K, Rb, Cs, Fr, Be, Mg, Ca, Sr, Si, Sb, Pb, In, Zn, Ba, Ra, Ge, Al, or Sn.

The material capable of doping/dedoping lithium may include a Si-based negative electrode active material or a Sn-based negative electrode active material. The Si-based negative electrode active material may include silicon, a silicon-carbon composite, SiOx ($0 < x < 2$), or a Si-Q alloy (where Q is selected from an alkali metal, an alkaline-earth metal, a Group 13 element, a Group 14 element (excluding Si), a Group 15 element, a Group 16 element, a transition metal, a rare earth element, or a combination thereof). The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material. When the second plate is a positive electrode plate, the positive electrode plate may include a positive current collector formed of thin aluminum foil, and a positive electrode active material layer containing a lithium-based oxide as a main component coated on at least one surface of the positive current collector. Positive uncoated regions, which are regions not coated with the positive electrode active material layer, may be formed at both ends of the positive current collector.

The negative electrode 20 of a rechargeable lithium battery 100 may include a current collector and a negative electrode active material layer on the current collector. The negative electrode active material layer may include a negative electrode active material, and may include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other or one another and to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may include a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, or a combination thereof.

When an aqueous binder is used as the negative electrode binder, a cellulose-based compound capable of providing viscosity may be included. The cellulose-based compound may include carboxymethyl cellulose, hydroxypropylmethyl cellulose, methyl cellulose, or an alkali metal salt thereof. The alkali metal may include Na, K, or Li.

The dry binder may include a polymer material that is fibrous. For example, the dry binder may include polytetrafluoroethylene, polyvinylidene fluoride, a polyvinylidene fluoride-hexafluoropropylene copolymer, polyethylene oxide, or a combination thereof.

The conductive material may ensure conductivity (e.g., electrical conductivity) to the electrode. Any material that does not cause a detrimental chemical change (e.g., does not cause an undesirable chemical change in the rechargeable lithium battery) while capable of conducting electrons can be used in the battery. Non-limiting examples of the conductive material may include a carbon-based material such as natural graphite, artificial graphite, carbon black, acetylene black, ketjen black, a carbon fiber, a carbon nanofiber, or a carbon nanotube; a metal-based material including copper, nickel, aluminum, or silver in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

## Separator

Depending on the type of the lithium secondary battery 100, the separator 30 may be present between the positive electrode 10 and the negative electrode 20. The separator 30 may include polyethylene, polypropylene, polyvinylidene fluoride, or a multilayer film of two or more layers thereof, or a mixed multilayer film such as a polyethylene/polypropylene two-layer separator, polyethylene/polypropylene/polyethylene three-layer separator, polypropylene/polyethylene/polypropylene three-layer separator.

The separator 30 may include a porous substrate and a coating layer including an organic material, an inorganic material, or a combination thereof on one or both surfaces of the porous substrate.

The porous substrate may be a polymer film including polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto.

The organic material and the inorganic material may be combined in one coating layer, or a coating layer including an organic material and a coating layer including an inorganic material may be stacked against each other.

## Electrolyte

The electrolyte for the secondary battery 100 includes the non-aqueous organic solvent and the lithium salt.

The non-aqueous organic solvent functions as a medium through which ions involved in an electrochemical reaction of the battery may migrate.

The non-aqueous organic solvent may be a carbonate-based, ester-based, ether-based, ketone-based, alcohol-based, or aprotic solvent, or a combination thereof.

The carbonate-based solvent may include a dimethyl carbonate (DMC), a diethyl carbonate (DEC), a dipropyl carbonate (DPC), a methylpropyl carbonate (MPC), an ethylpropyl carbonate (EPC), a methyl ethyl carbonate (MEC), an ethylene carbonate (EC), a propylene carbonate (PC), or a butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraglyme, diglyme, dimethoxyethane, 2-methyltetrahydrofuran, 2,5-dimethyltetrahydrofuran, or tetrahydrofuran.

The ketone-based solvent may include cyclohexanone.

The alcohol-based solvent may include ethyl alcohol or isopropyl alcohol.

The aprotic solvent may include nitriles such as R-CN (R is a linear, branched, or circular hydrocarbon group having 2 to 20 carbon atoms and may include a double bond, an aromatic ring, or an ether group), amides such as dimethylformamide, dioxolanes such as 1,3-dioxolane and 1,4-dioxolane, or sulfolane.

A single substance thereof may be used as the non-aqueous organic solvent, or two or more substances thereof may be mixed and used as the non-aqueous organic solvent. When the carbonate-based solvents are used, a circular carbonate and a chain carbonate may be mixed and used. The circular carbonate and the chain carbonate may be mixed in a volume ratio of 1:1 to 1:9.

The lithium salt is is dissolved in an organic solvent, operates as a supply source of lithium ions in a battery, allows a secondary battery to operate, and functions to facilitate movement of lithium ions between a positive electrode and a negative electrode. Non-limiting examples of the lithium salt may include $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis (fluorosulfonyl) imide (LiFSI), $LiC_4F_9SO_3$, $LiN(CxF_2x+1SO_2)(CyF_2y+1SO_2)$ (x and y are integers from 1 to 20), lithium trifluoromethane sulfonate, lithium tetrafluoroethanesulfonate, lithium difluorobis (oxalato) phosphate (LiDFOB), or lithium bis (oxalato) borate (LiBOB).

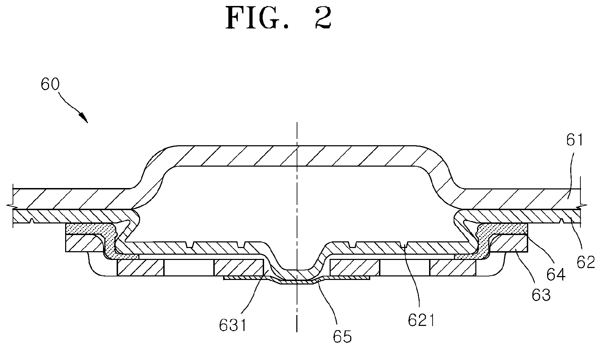

FIG. 2 is a schematic cross-sectional view illustrating the cap assembly.

The cap assembly 60 is coupled to the opening of the case 50. For example, when the opening of the case 50 is provided in the upper portion of the case 50, the cap assembly 60 is coupled to the upper portion of the case 50. For example, the opening of the case 50 is provided in a lower portion of the case 50, the cap assembly 60 is coupled to the lower portion of the case 50.

The cap assembly 60 seals an inner portion of the case 50. With reference to FIG. 1, the secondary battery 100 includes the electrode assembly 40 and the electrolyte (not shown) which are accommodated in the case 50. The cap assembly 60 allows the electrode assembly 40 and the electrolyte to be accommodated in the case 50.

The cap assembly 60 prevents heat from being transferred to an adjacent secondary battery and/or prevents the secondary battery 100 from explosion. The cap assembly 60 is electrically connected to the electrodes (for example, the positive electrode 10 and/or the negative electrode 20 described with reference to FIG. 1) extending from the electrode assembly 40. The cap assembly 60 allows the electrodes to be electrically connected to the exterior, so that the secondary battery 100 may receive a current from the exterior or may supply a current to the exterior.

The cap assembly 60 includes a cap-down 63 and a vent 62 located on one surface of the cap-down 63.

The cap assembly 60 may include a cap-up 61 provided at a side opposite to the cap-down 63 with respect to the vent 62. The cap assembly 60 may include an insulator 64 between the vent 62 and the cap-down 63. The cap assembly 60 may include a sub-plate 65 which connects the cap assembly 60 and the secondary battery 100.

The cap-up 61 may be located at an uppermost side of the cap assembly 60. The cap-up 61 is convex upward. The cap-up 61 includes a terminal part disposed at a convexly formed portion and is connected to an external circuit. At least a portion of a protruding upper surface of the cap-up 61 may have a flat geometry. The cap-up 61 may include one or more discharge holes disposed around the terminal part for discharging gas.

The cap-down 63 is located below the cap-up 61. One or more holes 631 may exist at at least a portion of the cap-down 63.

The vent 62 is located between the cap-up 61 and the cap-down 63. The vent 62 may be convex downward. The vent 62 includes at least one notch 621. For example, the notch 621 may be located at least a portion of a region formed to be convex downward in the vent 62. The vent 62 may discharge gas generated in the secondary battery 100 through the notch 621.

For example, when the secondary battery 100 is overcharged and/or operated abnormally, gas may be generated in the secondary battery 100, raising the internal pressure of the case 50. When the internal pressure of the secondary battery 100 is increased, in the vent 62, the region which is formed to be convex downward may be deformed upward due to the pressure. Accordingly, the vent 62 may be electrically disconnected from the electrode assembly 40. The vent 62 may be cut along the notch 621. As the vent 62 is cut, the gas in the case 50 is discharged. Accordingly, the cap assembly 60 may prevent the secondary battery 100 from potential explosions.

The insulator 64 is located between the cap-down 63 and the vent 62. For example, the insulator 64 is located along an edge between the cap-down 63 and the vent 62. For example, the insulator 64 may be formed in a ring geometry surrounding the edge between the cap-down 63 and the vent 62. Accordingly, the insulator 64 forms a gap between the cap-down 63 and the vent 62.

The insulator 64 insulates the cap-down 63 from the vent 62. For example, the insulator 64 may include a resin material such as polyethylene (PE), polypropylene (PP), or polyethylene terephthalate (PET).

For example, the insulator 64 may melt when an internal temperature of the case 50 reaches the melting point of the insulator 64. The gas generated in the case 50 is introduced through the gap between the cap-down 63 and the vent 62. The introduced gas increases a pressure of a space between the cap-down 63 and the vent 62 such that the vent 62 is ruptured by the gas. The gas may be discharged through the ruptured vent 62.

The sub-plate 65 is located below the cap-down 63. The sub-plate 65 may be fixed to a lower surface of the cap-down 63 to close a hole 631 formed in the cap-down 63.

The sub-plate 65 is bonded to the vent 62 through the hole 631 formed in the cap-down 63. For example, at least a portion of the vent 62 is exposed through the hole 631. The portion of the vent 62 corresponding to the hole 631 may be formed to protrude toward the cap-down 63. Accordingly, the protruding portion of the vent 62 may be inserted into the hole 631 and exposed downward. The sub-plate 65 is bonded to the vent 62 exposed.

The sub-plate 65 is located on the electrode assembly 40. The sub-plate 65 may be connected to a tab (not shown) extending from the electrode assembly 40. For example, one surface of the sub-plate 65 may be in contact with the vent 62 and/or the cap-down 63, and the other surface thereof may be in contact with the tab. The sub-plate 65 may be bonded to the tab via welding. The tab is electrically connected to each of the positive electrode 10 and/or the negative electrode 20, which are described with reference to FIG. 1, and formed to extend from each of the positive electrode 10 and/or the negative electrode 20. For example, a tab includes a positive electrode tab which is bonded to a positive electrode plate of the positive electrode 10, extends toward an upper side of the electrode assembly 40 from the positive electrode plate, and is connected to the sub-plate 65.

Through the above-described configuration, the cap assembly 60 may seal an inner portion of the secondary battery 100 and/or prevent explosion of the secondary battery 100.

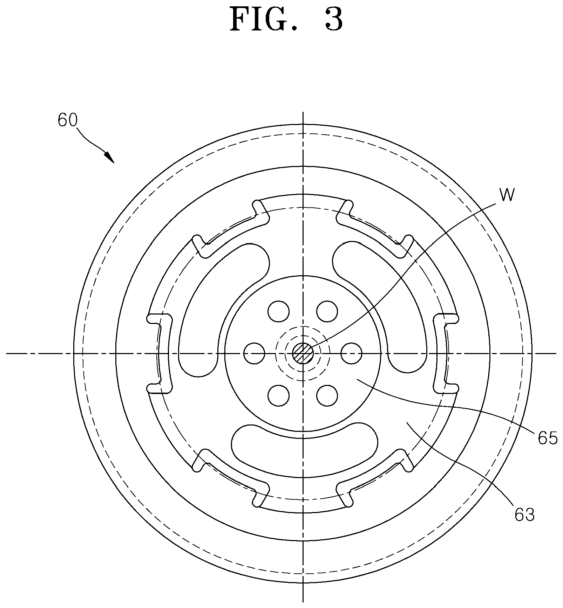

FIG. 3 is a schematic bottom view illustrating the cap assembly.

As described with reference to FIG. 2, the sub-plate 65 is bonded to the vent 62 exposed through the hole 631 formed in the cap-down 63. For example, the sub-plate 65 is bonded to the vent 62 through welding. In FIG. 3, a bonding part between the sub-plate 65 and the vent 62 is represented by "W."

The bonding part W should maintain a proper bonding strength. When the bonding strength of the bonding part W is not satisfactory, the cap assembly 60 may break when the cap assembly 60 receives a physical external force or a torque applied in a rotary direction. When the bonding strength of the bonding part W is excessive, the bonding part W may crack. When the bonding part W cracks, the secondary battery 100 may experience short-circuiting. Accordingly, a process of checking whether the bonding strength of the bonding part W is proper is required.

Destructive inspection has been conventionally performed to measure a bonding strength, where at least a portion of the bonding part W is damaged. In such an inspection, a resin is molded, a grinding process is performed, a cross section is magnified using an electron microscope, and a bonding depth of the bonding part W is checked. When the grinding process is performed, the bonding part W can be deformed. In addition, the time required to mold the resin can be relatively excessive. Because the resin molding and/or the grinding is manually performed, measurement deviation may occur among different inspectors.

Accordingly, embodiments of the present disclosure provide a method of inspecting a bonding strength of the bonding part W, wherein the method is non-destructive and/or does not involve human error in the measurement.

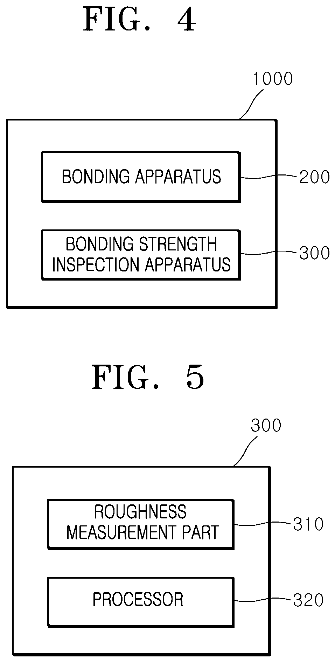

FIG. 4 is a schematic block diagram illustrating components of a bonding system.

A bonding system 1000 forms a bonding part.

A base metal and a bonding member are bonded to form the bonding part. For example, the bonding member is bonded to the base metal to form the bonding part. For example, the bonding part includes the bonding part W described with reference to FIG. 3. For example, the base metal includes the sub-plate 65 described with reference to FIG. 3. For example, the bonding member includes the bonding part W described with reference to FIG. 3. However, examples of the base metal and/or the bonding member are not limited thereto, the base metal and/or the bonding member include any materials which are bonded to form the bonding part.

The bonding system 1000 includes a bonding apparatus 200 and a bonding strength inspection apparatus 300. However, components included in the bonding system 1000 are not limited to those illustrated in FIG. 4, and the bonding system 1000 may further include components which are not illustrated in FIG. 4.

The bonding apparatus 200 bonds the base metal and the bonding member. For example, the bonding apparatus 200 bonds the base metal and the bonding member through welding. For example, the bonding apparatus 200 bonds the base metal and the bonding member through friction welding. For example, the bonding apparatus 200 bonds the base metal and the bonding member through ultrasonic welding.

For example, the bonding apparatus 200 locates the base metal and the bonding member such that the base metal is in contact with the bonding member. For example, the bonding apparatus 200 locates the base metal and the bonding member such that the base metal is in contact with the bonding member at a location at which the bonding part is formed. For example, the bonding apparatus 200 brings the vent 62 exposed through the hole 631 and the sub-plate 65 into contact with each other.

For example, the bonding apparatus 200 applies heat or a pressure to a portion at which the base metal and the bonding member are in contact with each other. Accordingly, the bonding apparatus 200 bonds the base metal and the bonding member. For example, the bonding apparatus 200 applies the heat or the pressure to the sub-plate 65 in contact with the vent 62 to bond the vent 62 and the sub-plate 65.

For example, the bonding apparatus 200 applies a pressure and/or ultrasonic vibrations to the portion at which the base metal and the bonding member are in contact with each other to generate friction at an interface at which the base metal and the bonding member are in contact with each other. Accordingly, the bonding apparatus 200 may friction-weld the base metal and the bonding member at the interface.

The bonding apparatus 200 bonds the base metal and the bonding member to form the bonding part which connects the base metal and the bonding member.

The bonding strength inspection apparatus 300 inspects a bonding strength of the bonding part formed by the bonding apparatus 200. For example, the bonding strength inspection apparatus 300 determines whether the bonding strength of the bonding is in a normal bonding state.

The normal bonding state affirms the quality of the bonding strength. For example, when the bonding part W between the sub-plate 65 and the vent 62 corresponds to the normal bonding state, a corresponding cap assembly 60 corresponds to a product which may be shipped to the consumer.

For example, a case, which is not in the normal bonding state, may include an insufficient bonding state and an over-bonding state. The insufficient bonding state relates to the bonding strength of the bonding part being insufficient, where the base metal and the bonding member are not sufficiently bonded. For example, when the bonding part W between the sub-plate 65 and the vent 62 is insufficient, a welding mark does not form on the bonding part W, or the vent 62 may not be sufficiently fixed to the sub-plate 65. The over-bonding state corresponds to a state in which excessive bonding occurs at the bonding part. For example, the over-bonding state includes cracks occurring in the base metal and/or the bonding member or an occurrence probability of crack being high. For example, when the bonding part W between the sub-plate 65 and the vent 62 is in the over-bonding state, cracks may occur in the bonding part W, or a short circuit may occur in the secondary battery 100.

The bonding strength inspection apparatus 300 measures a roughness of the bonding part and determines the bonding strength of the bonding part on the basis of the measured roughness. Accordingly, the bonding strength inspection apparatus 300 may quickly and accurately measure the bonding strength of the bonding part without destructing the bonding part.

When the bonding strength inspection apparatus 300 determines the bonding strength, the bonding apparatus 200 may control output power for bonding the base metal and the bonding member on the basis of the determined bonding strength. For example, when the bonding strength inspection apparatus 300 determines that the bonding strength is in the normal bonding state, the bonding apparatus 200 may maintain a pressure and/or an output of heat provided to the bonding part. For example, when the bonding strength inspection apparatus 300 determines that the bonding strength is insufficient, the bonding apparatus 200 may increase the pressure and/or the output of the heat provided to the bonding part. For example, when the bonding strength inspection apparatus 300 determines that the bonding strength is over-bonding, the bonding apparatus 200 may decrease the pressure and/or the output of heat provided to the bonding part.

The bonding system 1000 can bond the base metal and the bonding member while affirming the quality of the bonding strength. FIG. 5 is a schematic block diagram illustrating components of a bonding strength inspection apparatus.

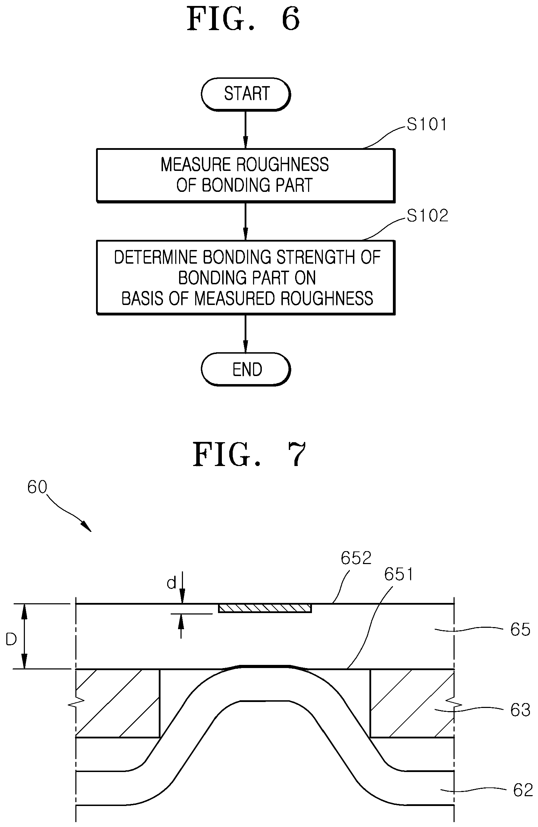

FIG. 6 is a flowchart describing operation of the bonding strength inspection apparatus.

A bonding strength inspection apparatus 300 (including, for example, the bonding strength inspection apparatus 300 described with reference to FIG. 3) inspects a bonding strength of a bonding part (including, for example, the bonding part W described with reference to FIG. 3, or the bonding part described with reference to FIG. 4).

The bonding strength inspection apparatus 300 includes a roughness measurement part 310 and a processor 320. However, components included in the bonding strength inspection apparatus 300 are not limited to those illustrated in FIG. 5, and the bonding strength inspection apparatus 300 may include components which are not illustrated in FIG. 5. For example, the bonding strength inspection apparatus 300 may include a communication part or a memory.

As illustrated in FIG. 6, the roughness measurement part 310 measures a roughness of a bonding part (S101).

The roughness measurement part 310 includes, for example, a contact type or non-contact type roughness measurement part 310. For example, the contact type roughness measurement part may measure a roughness by detecting a change while scanning a surface of the bonding part using a probe. For example, the non-contact type roughness measurement part may measure a roughness by obtaining a distribution pattern of an image by emitting laser light to the surface of the bonding part.

For example, the roughness measurement part 310 measures a roughness of the surface of the bonding part. For example, a base metal (for example, a sub-plate 65) includes a first surface (for example, a first surface 651 illustrated in FIG. 7) which faces a bonding member (for example, a vent 62) and a second surface (for example, a second surface 652 illustrated in FIG. 7) located at an opposite side of the first surface. The roughness measurement part 310 measures a roughness formed on the second surface. For example, the roughness measurement part 310 measures a roughness of a region corresponding to the bonding part (for example, the bonding part w) in the second surface.

For example, a roughness includes a ten-point average roughness Rz. However, the roughness is not limited thereto, and may also include an arithmetic mean roughness Ra or a maximum height roughness Rmax. For example, the roughness measurement part 310 measures the ten-point average roughness Rz of the surface of the bonding part.

As illustrated in FIG. 6, the processor 320 determines a bonding strength of the bonding part on the basis of the measured roughness (S102).

The processor 320 controls all or some components included in the bonding strength inspection apparatus 300. The processor 320 is embedded in the bonding strength inspection apparatus 300. The processor 320 may be located outside the bonding strength inspection apparatus 300 and may control the components included in the bonding strength inspection apparatus 300 through a communication part (not shown).

For example, the processor 320 includes a central processing unit (CPU), a microprocessor unit (MPU), a microcontroller unit (MCU), a graphics processing unit (GPU), a digital signal processor (DSP), a floating-point unit (FPU), an application specific integrated circuit (ASIC), or a field programmable gate array (FPGA).

For example, the processor 320 determines a bonding depth of the bonding part through the measured roughness. The processor 320 determines a ratio of the bonding depth to a thickness of the base metal. For example, the processor 320 determines a ratio of a bonding depth occupying a thickness of the sub-plate 65. The processor 320 determines the bonding strength of the bonding part on the basis of the ratio.

For example, when a determined ratio is within a predetermined range, the processor 320 determines that the bonding part is in a normal bonding state. For example, when a determined ratio is less than the predetermined range, the processor 320 determines that the bonding part is in an insufficient bonding state. For example, when a determined ratio is greater than the predetermined range, the processor 320 determines that the bonding part is in an over-bonding state.

For example, the processor 320 may express a bonding strength of the bonding part as a numerical value on the basis of a determined ratio. For example, the bonding strength inspection apparatus 300 includes a memory (not shown). The memory stores a relative bonding strength (represented using, for example, a class of the bonding strength corresponding to a ratio) and/or an absolute bonding strength (represented using, for example, a measurement value of the bonding strength according to a ratio) of the bonding part, which corresponds to a ratio. The processor 320 may determine the bonding strength of the bonding part using the bonding strength prestored in the memory. The processor 320 may provide not only whether the bonding strength of the bonding part is normal but also an extent of the bonding strength of the bonding part.

The processor 320 may obtain the bonding strength of the bonding part without destructing the bonding part.

Advantageously, the bonding strength inspection apparatus 300 provides an inspection method of measuring a bonding strength of the bonding part without destructing the bonding part. The bonding strength inspection apparatus 300 provides a method of measuring a bonding strength without a measurement deviation between inspectors by automatically inspecting the bonding part.

FIG. 7 is an enlarged view illustrating a bonding part in a cap assembly for describing a bonding depth.

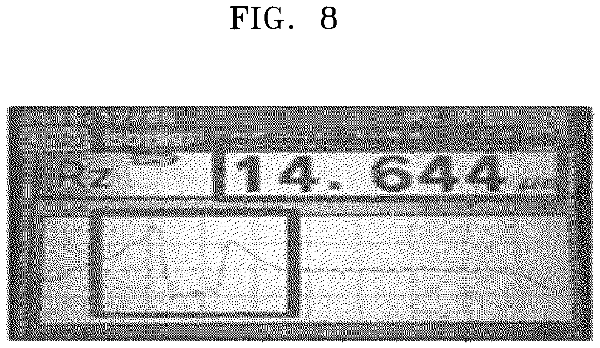

FIG. 8 is a view showing a roughness of the bonding part measured.

A bonding strength inspection apparatus 300 may inspect a bonding strength of a bonding part. As described with reference to FIGS. 5 and 6, the bonding strength inspection apparatus 300 measures a roughness of a bonding part using a roughness measurement part 310. The bonding strength inspection apparatus 300 measures a bonding strength of the bonding part on the basis of the roughness using the processor 320. With reference to FIGS. 7 and 8, a base metal is a sub-plate 65 and a bonding member is a vent 62.

As illustrated in FIG. 7, a portion of a vent 62 is bonded to the sub-plate 65. The sub-plate 65 includes a first surface 651 facing the vent 62 and a second surface 652 located at an opposite side of the first surface 651. A bonding apparatus 200 (for example, the bonding apparatus 200 described with reference to FIG. 4) applies heat or a pressure to the second surface 652 to bond the first surface 651 and the vent 62.

The roughness measurement part 310 measures a roughness of the second surface 652. For example, the roughness measurement part 310 measures a roughness of a region in which the bonding part is formed on the second surface 652.

For example, FIG. 8 shows a measurement result value of the roughness of the region in which the bonding part is formed on the second surface 652. For example, a roughness Rz of the bonding part may be 14.644 um.

The processor 320 determines a bonding depth d of the bonding part from the roughness. For example, as in FIG. 8, when the roughness measurement part 310 measures the roughness, the processor 320 may determine that the bonding depth d of the bonding part is 14.644 um. Accordingly, the processor 320 may determine the bonding depth d by substituting the value of the measured roughness.

The processor 320 calculates a ratio (%), which may be a depth ratio, of the bonding part to the base metal using the bonding depth d. For example, the processor 320 calculates the ratio (%) using following Equation 1.

$$[\text{Equation 1}]$$
$$\text{Ratio} (\%) = (d/D) * 100\ (\%)$$

In Equation 1, d is a bonding depth of a bonding part. For example, d is a surface roughness of the bonding part w in FIG. 7.

In Equation 1, D is a thickness of a base metal. For example, D is a thickness of the sub-plate 65 in FIG. 7.

The processor 320 determines the bonding strength of the bonding part on the basis of the calculated ratio. For example, the processor 320 may determine a bonding strength of the bonding part by determining whether a calculated ratio corresponds to a predetermined range. For example, the predetermined range may range from 10% to 50%.

For example, when a calculated ratio is within the predetermined range, the processor 320 determines that the bonding part is in a normal bonding state. For example, a calculated ratio is equal to or greater than 10% and less than or equal to 50%, the processor 320 may determine that the bonding part W is in the normal bonding state.

For example, when a calculated ratio is less than the predetermined range, the processor 320 determines that the bonding part is in an insufficient bonding state. For example, when a calculated ratio is less than 10%, the processor 320 may determine that the bonding part W is in the insufficient bonding state.

For example, when a calculated ratio is greater than the predetermined range, the processor 320 determines that the bonding part is in an over-bonding state. For example, when a calculated ratio is greater than 50%, the processor 320 may determine that the bonding part W is in the over-bonding state.

Accordingly, the bonding strength inspection apparatus 300 may inspect a bonding strength of the bonding part by measuring a roughness of the bonding part.

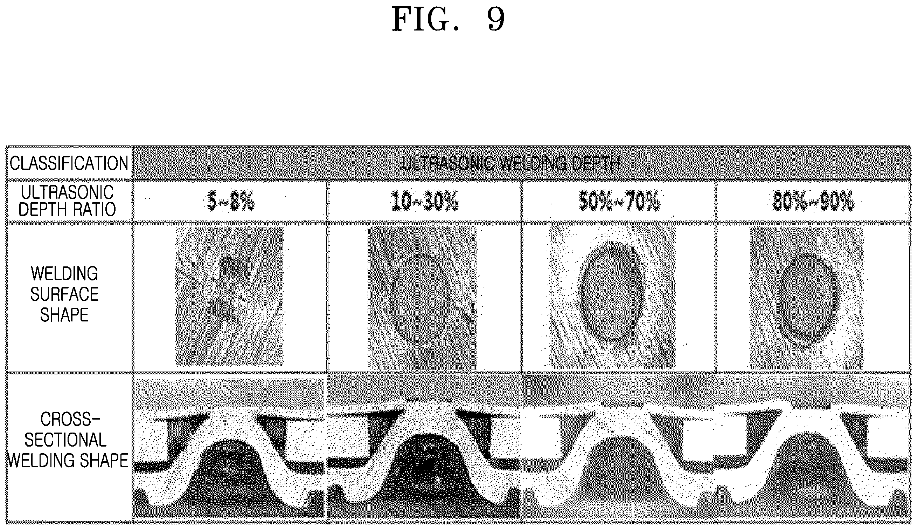

FIG. 9 is a view for describing a bonding strength according to a ratio of a bonding depth to a thickness of the base metal.

As described with reference to FIGS. 4 to 8, the bonding strength inspection apparatus 300 determines a bonding strength of the bonding part by calculating a ratio of a bonding depth to the base metal. The bonding strength inspection apparatus 300 determines the bonding strength by comparing a predetermined range with the calculated ratio.

The bonding strength inspection apparatus 300 may set the predetermined range. The bonding strength inspection apparatus 300 may include a memory (not shown). For example, the memory may store data on a bonding strength according to a ratio of a bonding depth to a base metal.

FIG. 9 is a table showing data stored in the memory to be read. FIG. 9 shows data of an example in which the sub-plate 65 and the vent 62 are bonded through ultrasonic welding to form the bonding part W. In FIG. 9, an ultrasonic depth ratio is a value that a ratio of the bonding depth to the base metal is calculated. In FIG. 9, a welding surface shape shows a surface of the bonding part W, that is, a welding mark formed by the welding. In FIG. 9, a cross-sectional welding shape shows a cross section of the welding mark formed in the sub-plate 65 and the vent 62.

For example, the processor 320 may set the predetermined range on the basis of the data stored in the memory. For example, the processor 320 may set a predetermined range by considering a ratio corresponding to each of an insufficient bonding state, a normal bonding state, and an over-bonding state.

For example, when a ratio calculated from the prestored data ranges from 5% to 8%, the processor 320 determines that a welding mark is not formed. For example, a ratio calculated from the prestored data ranges from 10 to 30%, the processor 320 determines that a welding mark is formed and cracks do not occur. Accordingly, the processor 320 may set a minimum value of the predetermined range to be greater than 8% and less than or equal to 10%. For example, the processor 320 may set a predetermined range to be equal to or greater than 10%.

For example, when a ratio calculated from the prestored data ranges from 50% to 70% or from 80% to 90%, the processor 320 determines that a welding mark is formed and cracks occur. Accordingly, the processor 320 may set a maximum value of a predetermined range to be greater than 30% and less than or equal to 50% (or less than 50%). For example, the processor 320 may set a predetermined range to be less than 50%.

For example, the processor 320 may set a predetermined range to be equal to or greater than 10% and less than or equal to 50%. When a calculated ratio is equal to or greater than 10% and less than or equal to 50%, the processor 320 may determine that a bonding strength of the bonding part is in the normal bonding state.

However, the method in which the processor 320 sets the predetermined range is not limited thereto. For example, the processor 320 may not set a predetermined range additionally and may use a predetermined range prestored in the memory. For example, the processor 320 may receive a predetermined range from a user (for example, an inspector who inspects a bonding strength of a bonding part) through a communication part and/or input part.

The bonding strength inspection apparatus 300 may measure a bonding strength of the bonding part by only measuring a roughness of the bonding part.

As a bonding system 1000 includes the bonding strength inspection apparatus 300, the quality of a bonding strength of the bonding part formed by the bonding apparatus 200 can be uniformly maintained.

Advantageously, a bonding strength of a bonding part can be measured without a measurement deviation between inspectors.

Advantageously, the accuracy of an inspection result can be improved.

Advantageously, a bonding strength of a bonding part can be quickly measured.

**Claims**

1. A bonding strength inspection apparatus (300) comprising:

   a roughness measurement part (310) configured to measure a roughness of a bonding part (W) in which a base metal and a bonding member are bonded to each other; and
   a processor (320) configured to determine a bonding strength of the bonding part (W) based on the roughness.

2. The bonding strength inspection apparatus (300) of claim 1, wherein the processor (320) is configured to determine a ratio of a bonding depth of the bonding part (W) to a thickness of the base metal based on the roughness, and wherein the processor (320) is configured to determine the bonding strength based on the ratio.

3. The bonding strength inspection apparatus (300) of claim 2, wherein the processor (320) is configured to determine the bonding part (W) being in a normal bonding state when the ratio is within a predetermined range.

**4.** The bonding strength inspection apparatus (300) of claim 2 or 3, wherein the processor (320) is configured to determine the bonding part (W) being in an insufficient bonding state when the ratio is less than a predetermined range, and wherein the processor (320) is configured to determine the bonding part (W) being in an over-bonding state when the ratio is greater than the predetermined range.

**5.** The bonding strength inspection apparatus (300) of any one of claims 2 to 4, further comprising a memory configured to store data on the bonding strength based on the ratio,
wherein the processor (320) is configured to set a predetermined range based on the data.

**6.** The bonding strength inspection apparatus (300) of claim 5, wherein the predetermined range ranges from 10% to 50%.

**7.** The bonding strength inspection apparatus (300) of claim 1, wherein the roughness includes a ten-point average roughness (Rz) of the bonding part (W).

**8.** A bonding system comprising (1000):

a bonding apparatus (200) configured to bond a bonding member to a base metal; and
a bonding strength inspection apparatus (300) according to any one of the preceding claims.

**9.** The bonding system (1000) of claim 8, wherein the base metal comprises a first surface facing the bonding member and a second surface located at a side opposite to the first surface, and wherein the bonding apparatus (200) is configured to apply heat or a pressure to the second surface to bond the first surface and the bonding member.

**10.** The bonding system (1000) of claim 9, wherein the roughness measurement part is configured to measure the roughness on the second surface.

**11.** The bonding system (1000) of any one of claims 8 to 10, wherein the bonding apparatus (200) is configured to bond the base metal and the bonding member via friction welding.

**12.** The bonding system (1000) of any one of claims 8 to 11, wherein the bonding apparatus (200) is configured to control output power for bonding the base metal and the bonding member based on the bonding strength.

**13.** The bonding system (1000) of any one of claims 8 to 12, wherein the bonding system (1000) is for a cap assembly (60) comprising: a cap-up (61); a vent (62) disposed below the cap-up (61); a cap-down (63) disposed below the vent (62) and having one or more holes (631) exposing at least a portion of the vent (62) downward; an insulator (64) disposed between the vent (62) and the cap-down (63); and a sub-plate (65) disposed below the cap-down (63) and coupled to the vent (62) via the one or more holes (631);:

the bonding apparatus (200) is configured to bond the sub-plate (65) and the vent (62); and the bonding strength inspection apparatus (300) is configured to measure a roughness of a bonding part (W) in which the sub-plate (65) and the vent (62) are bonded and configured to determine a bonding strength of the bonding part (W) based on the roughness.

# FIG. 1

# FIG. 2

# FIG. 3

# FIG. 4

```
                                    1000

    ┌──────────────────────────────────┐
    │                                  │
    │   ┌──────────────────────────┐   │
    │   │   BONDING APPARATUS      │───┼──200
    │   └──────────────────────────┘   │
    │                                  │
    │   ┌──────────────────────────┐   │
    │   │   BONDING STRENGTH       │───┼──300
    │   │   INSPECTION APPARATUS   │   │
    │   └──────────────────────────┘   │
    │                                  │
    └──────────────────────────────────┘
```

# FIG. 5

```
                                    300

    ┌──────────────────────────────────┐
    │                                  │
    │   ┌──────────────────────────┐   │
    │   │   ROUGHNESS              │───┼──310
    │   │   MEASUREMENT PART       │   │
    │   └──────────────────────────┘   │
    │                                  │
    │   ┌──────────────────────────┐   │
    │   │   PROCESSOR              │───┼──320
    │   └──────────────────────────┘   │
    │                                  │
    └──────────────────────────────────┘
```

# FIG. 6

START

|
▼

S101

```
MEASURE ROUGHNESS
OF BONDING PART
```

|
▼

S102

```
DETERMINE BONDING STRENGTH OF
BONDING PART ON
BASIS OF MEASURED ROUGHNESS
```

|
▼

END

# FIG. 7

60

652    651

d

D

65

63

62

FIG. 8

# FIG. 9

| CLASSIFICATION | ULTRASONIC WELDING DEPTH | | | |
|---|---|---|---|---|
| ULTRASONIC DEPTH RATIO | 5~8% | 10~30% | 50%~70% | 80%~90% |
| WELDING SURFACE SHAPE | | | | |
| CROSS-SECTIONAL WELDING SHAPE | | | | |

EP 4 725 641 A1

## EUROPEAN SEARCH REPORT

Application Number

EP 25 20 1871

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | FR 2 923 606 A1 (CONTROLE DES POINTS DE SOUDURE [FR]) 15 May 2009 (2009-05-15)<br>* p. 9, l. 6- p. 10, l. 9 * | 1,7-10,<br>12,13<br>11<br>2-6 | INV.<br>B23K31/12<br>H01M50/169 |
| X<br><br><br><br><br><br><br><br><br><br><br>Y | WANG HAIJUN ET AL: "Real-time welding condition monitoring by roughness information extracted from surface images",<br>MEASUREMENT, INSTITUTE OF MEASUREMENT AND CONTROL. LONDON, GB,<br>vol. 191, 3 February 2022 (2022-02-03),<br>XP086971271,<br>ISSN: 0263-2241, DOI:<br>10.1016/J.MEASUREMENT.2022.110833<br>[retrieved on 2022-02-03]<br>* 1. Introduction; 3. Results and discussion; Table 4 * | 1,7-10,<br>12,13<br><br><br><br><br><br><br><br><br>11 | |
| X<br>Y | WO 2024/202744 A1 (PANASONIC IP MAN CO LTD [JP]) 3 October 2024 (2024-10-03)<br>* fig. 6-7 and corresponding paragraphs * | 1,7-10,<br>12,13<br>11 | |
| X | XIA YU-JUN ET AL: "Online Precision Measurement of Weld Indentation in Resistance Spot Welding Using Servo Gun",<br>IEEE TRANSACTIONS ON INSTRUMENTATION AND MEASUREMENT, IEEE, USA,<br>vol. 69, no. 7,<br>30 September 2019 (2019-09-30), pages 4465-4475, XP011791869,<br>ISSN: 0018-9456, DOI:<br>10.1109/TIM.2019.2943981<br>[retrieved on 2020-06-09]<br>* I. Introduction * | 1-6,8-13 | |
| Y | JP 2010 101780 A (PANASONIC EV ENERGY CO LTD) 6 May 2010 (2010-05-06)<br>* the whole document * | 11 | |

**TECHNICAL FIELDS SEARCHED (IPC)**

B23K
H01M
G01B

The present search report has been drawn up for all claims

| Place of search | Date of completion of the search | Examiner |
|---|---|---|
| Munich | 27 February 2026 | Hernanz, Sonsoles |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

21

## ANNEX TO THE EUROPEAN SEARCH REPORT
## ON EUROPEAN PATENT APPLICATION NO.

EP 25 20 1871

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2026

| Patent document cited in search report | Publication date | Patent family member(s) | Publication date |
|---|---|---|---|
| FR 2923606 A1 | 15-05-2009 | NONE | |
| WO 2024202744 A1 | 03-10-2024 | CN 120826293 A | 21-10-2025 |
| | | JP WO2024202744 A1 | 03-10-2024 |
| | | US 2025387851 A1 | 25-12-2025 |
| | | WO 2024202744 A1 | 03-10-2024 |
| JP 2010101780 A | 06-05-2010 | NONE | |

EPO FORM P0459

For more details about this annex : see Official Journal of the European Patent Office, No. 12/82